(19) Europäisches Patentamt
European Patent Office
Office européen des brevets

(11) EP 1 836 433 B1

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(21) Anmeldenummer: **06707681.0**

(22) Anmeldetag: **09.01.2006**

(51) Int Cl.:
***F16L 59/08*** *(2006.01)*

(86) Internationale Anmeldenummer:
**PCT/EP2006/050101**

(87) Internationale Veröffentlichungsnummer:
**WO 2006/072634 (13.07.2006 Gazette 2006/28)**

(54) **WÄRMESTRAHLUNGSSCHUTZSCHIRM FÜR VAKUUM - UND SCHUTZGASÖFEN**

THERMAL RADIATION SHIELD FOR VACUUM AND PROTECTIVE ATMOSPHERE FURNACES

ECRAN DE PROTECTION CONTRE LES RAYONNEMENTS THERMIQUES POUR FOURS A VIDE ET FOURS A GAZ DE PROTECTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.01.2005 DE 102005001502**

(43) Veröffentlichungstag der Anmeldung:
**26.09.2007 Patentblatt 2007/39**

(73) Patentinhaber: **Fraunhofer-Gesellschaft zur Förderung der angewandten Forschung e.V.
80686 München (DE)**

(72) Erfinder:
- **ADLER, Jörg
01662 Meissen (DE)**
- **STANDKE, Gisela
019099 Dresden (DE)**
- **KOPEJZNY, Daniela
01662 Meissen (DE)**
- **STEPHANI, Günter
01454 Grosserkmannsdorf (DE)**
- **KÜMMEL, Kerstin
01326 Dresden (DE)**
- **BECKERT, Wieland
01129 Dresden (DE)**

(74) Vertreter: **Rauschenbach, Marion
Rauschenbach Patentanwälte,
Bienertstrasse 15
01187 Dresden (DE)**

(56) Entgegenhaltungen:
**DE-A1- 3 905 871**
**DE-B1- 2 504 852**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 836 433 B1

Printed by Jouve, 75001 PARIS (FR)

**Beschreibung**

Die Erfindung bezieht sich auf das Gebiet des Maschinenbaus und betrifft einen Strahlungsschutzschirm für Vakuum- und Schutzgasöfen, der zu einer möglichst guten Abschirmung der Wärmestrahlung eingesetzt wird.

Bei Verfahren und Vorrichtungen zur thermischen Behandlung von Stoffen oder Werkstücken soll aus Effektivitätsgründen die Wärmequelle (Heizer) und das zu behandelnde Material von der Umgebung thermisch abgeschirmt werden. Gleichzeitig muss die Umgebung (z.B. die Ofenwandung) vor zu hoher thermischer Belastung geschützt werden.

Die Ausbreitung von Wärme erfolgt im Wesentlichen durch drei Prinzipien: durch die Ausbreitung über Wärmeleitung in Stoffen (ohne Stoffbewegung), durch Konvektion (mit Stoffbewegung) und durch die Ausbreitung durch Wärmestrahlung. Letztere benötigt kein Übertragungsmedium, ist also auch im Vakuum möglich.

Zur thermischen Isolation wird aus den o.g. Gründen die Konvektion eingeschränkt oder verhindert und es werden als thermisch isolierende Stoffe Materialien mit geringer Wärmeleitfähigkeit und/oder Materialien, die die Wärmestrahlung reflektieren, verwendet.

Zur Wärmeisolierungen von thermischen Prozessen werden häufig thermisch isolierend wirkende Stoffe zwischen die Wärmequelle und die zu schützende Umgebung eingebracht, die eine Ausbreitung der Wärme behindern. Zur Wärmeisolation in Vakuum- und Schutzgasöfen spielt die Wärmeübertragung durch Konvektion und Wärmeleitung nur eine geringe Rolle, da das gasförmige Übertragungsmedium fehlt oder schlechte Wärmeleitungseigenschaften aufweist.

Die Übertragung durch Wärmeleitung nimmt in den meisten Stoffen mit der Temperatur ab, während die Wärmeübertragung durch Wärmestrahlung nach dem Stephan-Boltzmann-Gesetz mit der 4. Potenz bei steigender Temperatur zunimmt, so dass vor allem im Hochtemperaturbereich, d.h. also insbesondere in Vakuum- und Schutzgasöfen die Wärmeübertragung durch Strahlung eine sehr große Bedeutung hat.

Vakuum- und Schutzgasöfen werden deshalb wie in der US-B-6021155 offenbart durch so genannte Strahlungsschutzschirme aus refraktären Metallen, wie z.B. Mo, W, Ta und deren Legierungen, isoliert, die zwar selbst eine relativ hohe Wärmeleitfähigkeit besitzen, aber die Ofenwandungen von der thermischen Strahlung des Heizleiters abschirmen.

Die Fähigkeit eines Materials, Wärmestrahlung zu emittieren, wird durch den Emissionskoeffizienten $\varepsilon$ ausgedrückt, Wärme zu absorbieren, durch die Absorptionszahl a. Nach dem Gesetz von Kirchhoff ist der Emissionskoeffizient eines Körpers gleich der Absorptionszahl. In den nur theoretisch erreichbaren Grenzfällen von $\varepsilon = 1$ und $\varepsilon = 0$ wird Wärme vollständig absorbiert/abgestrahlt oder reflektiert. Bei Strahlungsschutzschirmen wird deshalb ein möglichst niedriger $\varepsilon$-Wert angestrebt. $\varepsilon$ hängt sowohl von dem verwendeten Material (als Materialkenngröße) als auch von der Oberflächenbeschaffenheit des Materials ab. Glatte Oberflächen besitzen einen niedrigeren Emissionskoeffizienten als raue Oberflächen. Weiterhin hängt $\varepsilon$ auch von der Temperatur ab, d.h. üblicherweise steigt der Wert mit zunehmender Temperatur.

Vor allem bei Öfen, bei denen die Temperaturbehandlung von Stoffen und/oder Werkstücken unter Vakuum oder unter Schutzgas, wie z.B. Stickstoff, Wasserstoff, Edelgase oder deren Gemische, bei niedrigeren Drücken als Umgebungsdruck erfolgt, sind die Strahlungsschutzschirme im Einsatz. Ein alternativer Einsatz von bekannten Wärmedämmstoffen ist deshalb ungünstig, da diese eine hohe innere Oberfläche besitzen und die daran absorbierten Stoffe im Vakuum schwierig zu entfernen sind, so dass die Erreichung eines hohen Unterdruckes im Ofen sehr lange dauert oder gar nicht möglich ist. Außerdem sind diese Wärmeisolationsstoffe häufig sehr voluminös und besitzen eine hohe Wärmekapazität, wodurch das Aufheizen und Abkühlen des Ofens sehr lange dauert. Hier haben herkömmliche Wärmestrahlungsschutzschirme den Vorteil, dass sie wenig Oberfläche und wenig Wärmekapazität besitzen, wodurch die Öfen schnell aufgeheizt und abgekühlt werden können und hohe Vakuumwerte erreichbar sind.

Wärmestrahlungsschutzschirme werden mehrfach hintereinander mit dazwischen liegenden Freiräumen angeordnet und befinden sich zwischen der Wärmequelle und dem thermisch zu schützenden Bereich. Beispielsweise sind in einem zylindrischen Ofen mit zylindrischen Heizleitern zwischen den Heizleitern und der Ofenwandung mehrere konzentrisch angeordnete Bleche aus Molybdän oder Wolfram in gleichmäßigen Abständen zueinander angeordnet. Am Boden und am Deckel des zylindrischen Ofens befinden sich runde Molybdän- oder Wolframbleche übereinander angeordnet.

Nachteilig bei der Verwendung von Wärmestrahlungsschutzschirmen sind der hohe Preis der Bleche aus den Refraktärmetallen und das hohe Gewicht solcher Bleche.
Es wurde daher versucht, so wenig wie möglich Refraktärmetall zu verwenden, indem beispielsweise dünnere Bleche eingesetzt werden. Dem sind aber insofern Grenzen gesetzt, da diese Bleche eine ausreichend hohe mechanische Festigkeit besitzen müssen, um sich beim Betrieb des Ofens nicht zu verformen und das Eigengewicht zu tragen. Andernfalls sind aufwändige Stütz- und Befestigungsvorrichtungen ebenfalls im Ofen erforderlich, die den Vorteil wieder aufheben.
Weiterhin verspröden die meisten Wärmestrahlungsschutzschirme nach kurzer Zeit, so dass sehr dünne Bleche sehr empfindlich gegenüber mechanischer Beanspruchung, z.B. infolge thermisch induzierter Spannungen oder bei Manipulationen im Ofen werden und deren Lebensdauer einschränken.

Ein weiterer Grund, dass mehrere Schirme hintereinander eingesetzt werden, ist, dass zwar die Oberfläche der Schutzschirme die Wärmestrahlung reflektiert, aber diese Reflektion nie vollständig ist. Dadurch absorbieren auch die Schutzschirme einen Teil der Wärmestrahlung und heizen sich selbst auf. Durch die relativ hohe Wärmeleitfähigkeit der Refraktärmetalle wird die an der der Wärmequelle zugewandten Seite absorbierte Wärme auf die Rückseite des Schutzschirmes geleitet und dort wieder abgestrahlt. Erst durch eine Kaskadierung von Schutzschirmen kann erreicht werden, dass eine hohe Wärmeisolation eintritt. Nachteilig ist, dass viele Schutzschirme eingesetzt werden müssen und diese schwer und teuer sind.

Bei den o.g. Refraktärmetallen ergibt sich infolge der hohen Wärmeleitfähigkeit und der geringen Dicke der Schutzschirme nur ein sehr geringer, faktisch nicht messbarer thermischer Gradient zwischen Vorder- und Rückseite des einzelnen Schirmes.

Die Wirkung eines Wärmestrahlungsschutzschirmes im Vakuum auf die durchgeleitete Wärmestromdichte $j^{th}$ kann für den Fall einer parallelen Anordnung des Schutzschirmes zwischen einer flächigen Wärmequelle mit Temperatur $T_1$ und der Umgebung mit Temperatur $T_0$ mit einer Effektiven Emissivität $\varepsilon_{eff}$ beschrieben werden ($\sigma$ = Stefan-Boltzmann-Konstante = $5{,}67 \cdot 10^{-8}$ W/m$^2$K$^4$):

$$j^{th} = \varepsilon_{eff} \cdot \sigma \cdot \left(T_1^4 - T_0^4\right)$$

Der Einfluss der Oberflächenemissionskoeffizienten $\varepsilon$, der Dicke d und der inneren Wärmeleitfähigkeitskoeffizienten $\lambda$ des Wärmestrahlungsschutzschirmes kann für den o.g. Fall nach folgender Gleichung näherungsweise abgeschätzt werden (Wärmequelle angenommen als "schwarzer Strahler" mit $\varepsilon$ =1):

$$\frac{1}{\varepsilon_{eff}} = \frac{2}{\varepsilon} + 4 \cdot \sigma \cdot T_1^3 \cdot \frac{d}{\lambda} \cdot \left(\frac{1}{2} + \frac{1}{2} \cdot \frac{T_0^4}{T_1^4}\right)^{\frac{3}{4}}$$

Je geringer die effektive Emissivität eines Wärmestrahlungsschutzschirmes ist, desto weniger Wärme wird durch den Schirm gelangen. Typische Werte von dünnen Wärmestrahlungsschutzschirmen für Vakuum- und Schutzgasöfen aus Molybdän oder Wolfram liegen bei $\varepsilon_{eff} \geq 0{,}07$, typischerweise bei >0,175, wenn keine hochpolierten Bleche verwendet werden, was aufwändig und teuer ist. Diese Werte sind wegen der hohen Wärmeleitfähigkeit nur sehr geringfügig abhängig von der Dicke des Schildes. Typischerweise werden je nach Ofengröße Bleche von 0,1 mm bis 1 mm Dicke verwendet, so dass die Flächengewichte für Molybdänbleche von 1-10,4 kg/m$^2$ und für Wolframbleche von 1,9-19,3 kg/m$^2$ reichen.

In der AT-PS 279190 sind Strahlschutzkörper für Hochtemperaturöfen angegeben, bei denen auf ein Gerüst auswechselbare, gewellte Bleche aus hochschmelzendem Metall angebracht werden. Allerdings erhöhen die Gerüste wieder das Gewicht und die Kosten für die Isolation.

Durch Noppen ausgeprägte Abstandshaltung von Blechen für Hitzeschilder sind in DE 44 29 104 A1 beschrieben. Hier wird im wesentlichen die Wärmedämmung in Luftanwendungen bei relativ niedrigen Temperaturen erhöht, da dabei das isolierende Gas (Luft) zwischen den Blechen/Folien eingeschlossen und dessen Konvektion verhindert wird.

In der AT-PS 390688 werden zwischen Schutzblechen in Vakuumanlagen Vliese, Gewebe oder Geflechte aus Metalldrähten eingeführt, um die Wärmeleitung zwischen den Blechen zu verbessern und eine verbesserte und gleichmäßigere Wärmeableitung von einer Hochtemperatur-Wärmequelle zu ermöglichen, was im Gegensatz zur angestrebten Funktion des erfindungsgemäßen Strahlungsschutzschirmes steht.

Andere Hitzeschilde, z.B. in JP 09176821 bestehen aus einem metallischen Träger und einer zumeist keramischen Wärmedämmschicht, mit verschiedenen Zwischenlagen zur Haftvermittlung und Korrosionsschutz. Die Wärmedämmschicht verringert die Wärmeleitung bei niedrigen Temperaturen und schützt den metallischen Träger vor der Wärmeeinwirkung. Bei sehr hohen Temperaturen würde allerdings eine hohe Absorption der Strahlungswärme in der Wärmedämmschicht auftreten und das Hitzeschild an Wirksamkeit verlieren.

In DE 197 50 517 A1 ist eine poröse Metallfaserfilz-Zwischenschicht aufgebracht, wobei die Zwischenschicht eine bessere aktive Kühlung durch erzwungene Konvektion mit einem Kühlmedium ermöglichen soll. Diese Kühlung ist aber technisch sehr aufwändig und deshalb für Vakuum- und Schutzgasöfen nicht geeignet.

Wiederum andere Hitzeschilde, z.B. in DE 199 47 755 oder DE 36 07 047 sind aus porösem Material aufgebaut und werden von einem heißen Medium (z.B. Abgas oder Reaktionsprodukten) durchströmt, d.h. hier wird ein hoher Anteil an Wärme durch die Randbedingungen des technischen Prozesses über Konvektion übertragen. Dabei soll durch einen hohen Wärmeübergang die Wärme des heißen, durchströmenden Mediums auf das poröse Medium übertragen werden, welches durch Zurückstrahlung in den Reaktionsraum den Austrag der Wärme mit dem Medium verringern soll. Zu diesem Zweck soll aber die Emissivität der Oberfläche möglichst hoch sein, was aber bei hohen Temperaturen sehr ungünstig ist, da dann auch ein hoher Anteil der Strahlungswärme absorbiert wird.

Thermisch besonders gut isolierende Materialien werden u.a. in JP 63263370 oder US 5,744,225 durch einen Mehrschichtenaufbau erzielt, der die unterschiedliche spektrale Durchlassfähigkeit der Wärmestrahlung von verschiedenen Materialien ausnutzt.

Die Aufgabe der vorliegenden Erfindung besteht in der Angabe von Wärmestrahlungsschutzschirmen mit verringertem Gewicht bei gleicher oder geringerer effektiver Emissivität.

Die Aufgabe wird durch die in den Ansprüchen 1 und 2 angegebene Erfindung gelöst. Vorteilhafte Ausgestaltungen sind Gegenstand der Unteransprüche.

Ein erfindungsgemäßer Wärmestrahlungsschutzschirm für Vakuum- und Schutzgasöfen besteht mindestens aus einem porösen keramischen und/oder metallischen Material, und besitzt mindestens auf einer Oberfläche in Richtung der Wärmequelle hohe wärmestrahlungsreflektierende Eigenschaften.

Von Vorteil ist, wenn der Wärmestrahlungsschutzschirm einen Emissionskoeffizienten an der Oberfläche von 0,03-0,5 im Temperaturbereich von 20-1800°C aufweist.

Vorteilhafterweise besteht ein erfindungsgemäßer Wärmestrahlungsschutzschirm aus einem keramischen und Material mit einer Porosität im Bereich von 80 bis 97 %, noch vorteilhafterweise im Bereich $\geq$ 90 %.

Es ist weiterhin von Vorteil, wenn für die wärmestrahlungsreflektierenden Eigenschaften ein Material mit geringem Emissionskoeffizienten auf das poröse keramische und/oder metallische Material aufgebracht wird. Dabei ist es besonders vorteilhaft, wenn der Emissionskoeffizient des aufgebrachten Materials einen Emissionskoeffizienten von 0,03-0,35 im Temperaturbereich von 20-1800°C aufweist. Es ist auch von Vorteil, wenn dieses Material mit geringem Emissionskoeffizienten eine Metallfolie oder noch besser eine dichte, porenfreie Metallfolie oder eine dichte Schicht ist.

Von Vorteil ist es auch, wenn das poröse keramische Material ein Keramikschaum ist, noch vorteilhafterweise, wenn es aus Aluminiumsilikat, Siliciumnitrid, Siliciumcarbid besteht.

Auch von Vorteil ist es, wenn das poröse metallische Material ein Metallschaum, noch vorteilhafterweise, wenn der Metallschaum aus hitzebeständigen Stahllegierungen, Metalllegierungen oder Refraktärmetallen, wie Molybdän, Wolfram, Tantal, oder deren Legierungen besteht.

Ein weitere Vorteil besteht, wenn der poröse keramische Schaum oder der Metallschaum ein richtungsabhängig strukturiertes dreidimensionales Netzwerk ist, wobei es noch vorteilhafter ist, wenn die richtungsabhängige Strukturierung eine geringere Wärmeleitfähigkeit des Materials senkrecht zur Oberfläche in Richtung der Wärmequelle aufweist als in paralleler Richtung zur Oberfläche in Richtung der Wärmequelle.

Ebenfalls von Vorteil ist es, wenn der poröse keramische Schaum oder der Metallschaum Schaumzellweiten von 0,2 bis 6 mm aufweist.

Vorteilhafterweise weist das wärmestrahlungsreflektierende Material mit geringem Emissionskoeffizienten eine Dicke von 0,005 bis 1,00 mm noch vorteilhafter von 0,005 bis 0,5 mm auf.

Auch vorteilhafterweise bestehen das poröse keramische und/oder metallische Material und das wärmestrahlungsreflektierende Material mit geringem Emissionskoeffizienten aus dem gleichen Werkstoff, noch vorteilhafterweise aus einem Metall und insbesondere aus Molybdän oder Wolfram oder aus einer Molybdän- oder Wolframlegierung.

Weiterhin vorteilhafterweise ist das poröse keramische und/oder metallische Material vollständig von einem wärmestrahlungsreflektierenden Material mit geringem Emissionskoeffizienten umgeben, wobei noch vorteilhafterweise das wärmestrahlungsreflektierende Material mit geringem Emissionskoeffizienten vakuumdicht das poröse keramische und/oder metallische Material umschließt und insbesondere im inneren Volumen, das von dem wärmestrahlungsreflektierenden Material mit geringem Emissionskoeffizienten umschlossen ist, ein Vakuum vorliegt.

Von Vorteil ist auch, wenn das wärmestrahlungsreflektierende Material mit geringem Emissionskoeffizienten mindestens auf einer Oberfläche in Richtung der Wärmequelle einen möglichst niedrigen Emissionskoeffizienten und gleichzeitig das poröse keramische und/oder metallische Material einen möglichst niedrigen Wärmeleitkoeffizienten aufweist, wobei noch vorteilhafterweise der Emissionskoeffizient im Bereich von 0,03 bis 0,5 im Temperaturbereich von 20-1800°C und gleichzeitig der Wärmeleitkoeffizient im Bereich von 0,01 bis 3 W/mK im Temperaturbereich von 20-1800°C liegt. Besonders vorteilhaft ist es, wenn der Emissionskoeffizient im Bereich von 0,03 bis 0,3 im Temperaturbereich von 20-1800°C und gleichzeitig der Wärmeleitkoeffizient im Bereich von 0,01 bis 1 W/mK im Temperaturbereich von 20-1800°C liegen.

Weiterhin vorteilhaft ist es, wenn der effektive Emissionskoeffizient nach der Formel

$$\frac{1}{\varepsilon_{eff}} = \frac{2}{\varepsilon} + 4 \cdot \sigma \cdot T_1^3 \cdot \frac{d}{\lambda} \cdot \left( \frac{1}{2} + \frac{1}{2} \cdot \frac{T_0^4}{T_1^4} \right)^{\frac{3}{4}}$$

berechenbar ist, wobei dann der Wärmestrahlungsschutzschirm einen effektiven Emissionskoeffizienten im Bereich von 0,001 - < 0,15, und vorteilhafterweise im Bereich von 0,001 - 0,069 aufweist.

Wegen der geringen Wärmeleitfähigkeit des porösen Materials nimmt der effektive Emissionskoeffizient mit der Dicke ab. Es ist möglich, relativ große Dicken für das poröse Material, z.B. 5-20 mm zu verwenden, da die Masse und die damit verbundenen Materialkosten infolge der Porosität des Materials mit zunehmender Dicke nur geringfügig steigen. Gleichzeitig kann das wärmestrahlungsreflektierende Material mit geringem Emissionskoeffizienten an der Oberfläche des porösen Materials, das über eine höhere Dichte verfügt, möglichst dünn, z.B. 0,07 mm, ausgeführt werden. Das jeweilige Optimum richtet sich nach den für den jeweiligen Ofen verfügbaren Platzverhältnissen und dem angestrebten Gewicht und/oder Kosten für die Wärmestrahlungsschutzschilde. Dieses Optimum kann von einem Fachmann leicht ermittelt werden.

Die erfindungsgemäße Lösung zeigt im Vergleich zu einem Wärmestrahlungsschutzschirm nach dem Stand der Technik ein deutlich geringeres Gewicht. Das geringere Gewicht wird in erster Linie erreicht durch den Einsatz von porösem keramischem und/oder metallischem Material und weiterhin auch durch den Einsatz von weniger Material, da das erfindungsgemäß eingesetzte Material die geforderte Schutzfunktion aufgrund seiner wärmetechnischen Eigenschaften besser erfüllt. Dabei kann der effektive Emissionskoeffizient etwa gleich der von bekannten Wärmestrahlungsschutzschirmen sein oder auch geringer.

Der besondere Vorteil der erfindungsgemäßen Wärmestrahlungsschutzschirme gegenüber Wärmestrahlungsschutzschirmen nach dem Stand der Technik liegt darin, dass der geringe Emissionskoeffizient mindestens auf einer Oberfläche in Richtung der Wärmequelle eines Vakuum- und Schutzgasofens zu einer möglichst vollständigen Reflexion der Wärmestrahlung der Wärmequelle führt und nur einen möglichst geringen Teil der Wärmestrahlung in das Material eindringen lässt, wobei gleichzeitig durch den Einsatz des porösen keramischen und/oder metallischen Materiales eine möglichst geringe Wärmeleitung im Inneren des Materials realisiert wird.

Weiterhin zeigen die erfindungsgemäßen Wärmestrahlungsschutzschirme ihre vorteilhaften Eigenschaften nur in Vakuum- und Schutzgasöfen im Hochtemperaturbereich ab ca. 600 °C. Für Anwendungen in Öfen mit niedrigeren Temperaturen sind andere Lösungen aus dem Stand der Technik vorteilhafter einsetzbar.

Besonders vorteilhaft ist es, wenn der erfindungsgemäße Wärmestrahlungsschutzschirm in Form eines sogenannten Sandwichaufbaus vorliegt, wobei ein poröses bis hochporöses Material von einem Material mit geringem Emissionskoeffizienten auf einer Seite in Richtung der Wärmequelle ganz oder teilweise bedeckt, beispielsweise mit einer Folie kaschiert, ist. Diese Folie kann dabei wiederum vorteilhafterweise aus einem hochtemperaturbeständigen Metall bestehen. Zur weiteren Kostenersparnis können die Stirnseiten und die Rückseite des porösen Materials mit einer Folie aus einem billigeren Material mit vergleichsweise schlechteren Eigenschaften bedeckt sein. Bei einem vakuumdichten Abschluss der Folien um das poröse Material kann der Innenraum, der von den Folien umschlossen wird, auch evakuiert werden, so dass dieses Vakuum gleichzeitig noch als Isolation wirkt.

Die Verbindung zwischen dem porösen Material und dem wärmestrahlungsreflektierenden Material kann stoff- und/oder formschlüssig sein. Bei einer stoffschlüssigen Verbindung bestehen zwischen den Materialien stoffliche Verbindungsstellen, beispielsweise durch Sinterbrücken oder Lötstellen. Bei einer formschlüssigen Verbindung wird beispielsweise durch mechanische Befestigungen, wie Hinterschneidungen oder Verbindungselemente, wie Stifte, Drähte, Schrauben die Verbindung hergestellt. Beide Verbindungsmöglichkeiten können lösbar oder unlösbar sein. Durch lösbare Verbindungen können vorteilhafterweise auch nur einzelne Wärmestrahlungsschutzschirme oder Teile der Wärmestrahlungsschutzschirme bei Verschleiß oder Versagen ausgetauscht werden. Weiterhin kann auch eine ursprünglich formschlüssige Verbindung durch den Einsatz in einem Ofen zu einer stoffschlüssigen Verbindung umgewandelt werden, beispielsweise durch Versinterung der Kontaktstellen zwischen dem porösen Material und dem wärmestrahlungsreflektierenden Material. Besonders bevorzugt ist eine Befestigungsvariante, bei der ein möglichst geringer Wärmeübergang zwischen dem wärmestrahlungsreflektierenden Material und dem porösen Material auftritt.

Für den Fall des Einsatzes von Schäumen betragen vorteilhafte Schaumdicken 2-20 mm, Schaumzellweiten 0,2 bis 6 mm, Schaumdichten 3 bis 20 %, vorzugsweise 5 bis 10 % der Dichte des Bulkmaterials.

Die Schaumdichten führen zu einer Porosität der eingesetzten porösen Materialien von 80 bis 97 %, vorzugsweise 90 bis 95 % der theoretischen Dichte. Durch diese hohen offenen (d.h. von außen zugänglichen) Porositäten wird eine relativ schnelle Evakuierbarkeit des Ofeninnenraums gewährleistet.

Das erfindungsgemäße wärmestrahlungsreflektierende Material ist vorteilhafterweise eine Metallschicht mit einer Dicke von 0,005 bis 1,00 mm, und ist möglichst dicht, das heißt möglichst porenfrei oder im Falle einer Schicht möglichst nur geschlossene Poren enthaltend.

Das erfindungsgemäße wärmestrahlungsreflektierende Material ist auf seiner Oberfläche in Richtung der Wärmequelle möglichst glatt. Dieses erfindungsgemäße wärmestrahlungsreflektierende Material wirkt wie ein herkömmlicher Wärmestrahlungsschutzschirm nach dem Stand der Technik. Das nachfolgende poröse Material verringert die Wärmeleitung und ist gleichzeitig deutlich leichter, als die herkömmlichen Wärmestrahlungsschutzschirme.

Weiterhin ergibt sich durch die geringe Wärmeleitung des Wärmestrahlungsschutzschirmes eine deutlich niedrigere Oberflächentemperatur der von der Wärmequelle abgewandten Seite des Wärmestrahlungsschutzschirmes, als an der der Wärmequelle zugewandten Seite. Durch die allgemeine Temperaturabhängigkeit der Emissionskoeffizienten, die üblicherweise zu deren Verringerung mit sinkender Temperatur führt, wird dadurch auch weniger Wärme an der Rückseite abgestrahlt.

Bei Benutzung eines Hochtemperaturofens wird die Oberfläche der Wärmestrahlungsschutzschirme häufig durch Verzunderung oder Ablagerungen verändert, was in der Regel zu einer Erhöhung der Emissionskoeffizienten führt, wodurch ungünstigerweise mehr Wärme an der der Wärmequelle zugewandten Seite des Wärmestrahlungsschutzschirmes absorbiert und an der Rückseite abgegeben wird. Dadurch sinkt die wärmeisolierende Funktion der Wärmestrahlungsschutzschirme mit der Zeit, wodurch auch deren funktionelle Lebensdauer begrenzt ist. Durch die Verringerung der Rückseitentemperatur der erfindungsgemäßen Wärmestrahlungsschutzschirme wird trotz der gleichen Verschlechterung der Emissionskoeffizienten dessen Auswirkung aus den o.g. Gründen verringert, was in einer längeren funktionellen Lebensdauer resultiert.

Weiterhin kann das erfindungsgemäße wärmestrahlungsreflektierende Material auch zur mechanischen Stabilisierung des porösen Materials dienen oder umgekehrt.

Von Vorteil kann eine Ausgestaltung der erfindungsgemäßen Lösung sein, bei der bei vergleichbarer Fläche gegenüber herkömmlichen Wärmestrahlungsschutzschirmen nach dem Stand der Technik bei gleicher Wärmeleitung senkrecht zu Fläche des Wärmestrahlungsschutzschirmes das Gewicht und die Wärmekapazität deutlich verringert sind. Bei einer anderen Ausgestaltung kann bei vergleichbarer Masse und Wärmekapazität die Wärmeleitung senkrecht zur Fläche des Wärmestrahlungsschutzschirmes deutlich verringert sein, so dass weniger Wärmestrahlungsschutzschirme in der Isolationszone eines Ofens eingesetzt werden müssen.

Erfindungsgemäße Wärmestrahlungsschutzschirme, bei denen das wärmestrahlungsreflektierende schichtförmige Material und das poröse Material aus dem gleichen Metall bestehen, besitzen eine Dichte von 5-30% des reinen Metalls.

Erfindungsgemäße Wärmestrahlungsschutzschirme aus Molybdän besitzen ein Gewicht von 2-10 kg /m$^2$ Fläche und die Wärmeleitung senkrecht zur Oberfläche beträgt 0,2-10 W/mK bei Raumtemperatur und 0,3-15 W/mK bei 1000 °C unter Vakuumatmosphäre im Ofenraum bei gleicher oder verbesserter Wärmestrahlungsreflexion, wie ein herkömmlicher Wärmestrahlungsschutzschirm. Zum Vergleich besitzt ein 1 mm starkes Molybdän-Blech ein Flächengewicht von 10 kg/m$^2$ und weist eine Wärmeleitfähigkeit von 145 W/mK bei Raumtemperatur und 105 W/mK bei 1000 °C auf.

Erfindungsgemäße Wärmestrahlungsschutzschirme aus Wolfram besitzen ein Gewicht von 5-30 kg/m$^2$ Fläche und die Wärmeleitung senkrecht zur Oberfläche beträgt 0,4-20 W/mK bei Raumtemperatur und 0,6-30 W/mK bei 1000 °C unter Vakuumatmosphäre im Ofenraum bei gleicher oder verbesserter Wärmestrahlungsreflexion, wie ein herkömmlicher Wärmestrahlungsschutzschirm. Zum Vergleich besitzt ein 1 mm starkes Wolfram-Blech ein Flächengewicht von 19 kg/m$^2$ und weist eine Wärmeleitfähigkeit von 165 W/mK bei Raumtemperatur und 135 W/mK bei 1000 °C auf.

Die Herstellung eines erfindungsgemäßen Wärmestrahlungsschutzschirmes im Falle des Einsatzes eines Schaumes erfolgt nach an sich bekannten Verfahren. Dazu wird ein offenzelliger Polymerschaum mit einer Pulversuspension beschichtet, getrocknet, das Polymer ausgebrannt und einer Temperaturbehandlung unterzogen (US 3,090,094 für Keramikschäume; US 3,111,396 für Metallschäume). Anstelle eines Polymerschaumes kann auch ein anderes thermisch oder chemisch entfernbares offenzelliges Material verwendet werden (DE 197 53 249 A1).

Der fertige Schaum mit den gewünschten Abmessungen kann so als Wärmestrahlungsschutzschirm eingesetzt werden. Vorteilhafterweise wird er auf der Seite in Richtung der Wärmequelle oder auch auf der entsprechenden Rückseite mit einem erfindungsgemäßen wärmestrahlungsreflektierenden Material, vorteilhafterweise Metallfolien, belegt und dieses auf der Schaumoberfläche befestigt. Dabei kann eine formschlüssige Verbindung durch Umbiegen der Metallfolie um die Seitenkanten des Schaumes oder durch Biegen oder Falzen in vorhandene Aussparungen in dem Schaum oder durch Eindrücken von einzelnen Bereichen der Folie in die offenen Zellen des Schaumes erfolgen. Es können auch Haken, Drähte, Stifte aus der Folie herausgedrückt werden, die sich im Schaum verhaken oder in Bohrungen im Schaum geführt werden. Auch können diese Befestigungselemente durch den Schaum hindurchgeführt und auf der gegenüberliegenden Seite befestigt werden. Es können auch separat gefertigte Haken, Drähte, Stifte zur Befestigung verwendet werden.

Weiterhin kann die Folie durch Löten an dem Schaum, auch lokal begrenzt, befestigt werden, sofern Schaum und Folie nicht aus dem gleichen Material bestehen. In dem Fall gleicher Materialien ist eine Versinterung möglich, die zu einer unlösbaren Verbindung führt.

Eine weitere vorteilhafte Möglichkeit zur Herstellung eines erfindungsgemäßen Wärmestrahlungsschutzschirmes besteht in der Herstellung einer Folie aus Metallpulver, Aufbringung auf eine Vorstufe des Schaumes und einer gemeinsamen Sinterung. Dazu wird eine Metallpulversuspension auf eine glatte Unterlage aufgebracht und zu einer Folie verarbeitet. Ein Polymerschaum in der Form des gewünschten Wärmestrahlungsschutzschirmes wird ebenfalls mit einer Metallpulversuspension beschichtet und getrocknet. Dieses beschichtete Polymerschaumformteil wird auf die noch feuchte Metallfolie aufgelegt und dadurch mit diesem verklebt. Nach dem Antrocknen wird die Rückseite mit der feuchten Metallfolie beschichtet und angetrocknet. Das so beschichtete Schaumformteil wird einer Temperaturbehandlung unterworfen, wobei mit zunehmender Temperatur zuerst der Polymerschaum und die verwendeten Formgebungshilfsmittel verbrannt oder thermisch zersetzt werden und gasförmig entweichen und anschließend die Pulverpartikel versintern. Dadurch liegt am Ende des Verfahrens ein erfindungsgemäßer Wärmestrahlungsschutzschirm vor.

Ebenfalls ist es möglich, eine dickflüssige Paste aus einem Metallpulver auf einen ungesinterten oder gesinterten Schaum aufzurakeln oder aufzustreichen und nach dem Antrocknen zu sintern.

Weiterhin kann durch Aufbringen eines dünnen textilen Flächengebildes in Form eines Gewebes, Gewirkes, Gestrickes oder Vlieses aus Metalldrähten auf einen gesinterten oder ungesinterten Schaum und durch Füllen der Zwischenräume zwischen den Metalldrähten durch beispielsweise Besprühen und nachfolgender Trocknung und Sinterung ein erfindungsgemäßer Wärmestrahlungsschutzschirm hergestellt werden.

Besonders dünne Schichten von wärmestrahlungsreflektierendem Material können durch bekannte Beschichtungsverfahren, z.B. über thermisches Spritzen, PVD oder CVD aufgebracht werden.

Auch kann eine dünne Matte aus Polymer- oder Naturfaserstoff, beispielsweise in Form eines Gewebes, Gewirkes, Gestrickes oder Vlieses, auf den gesinterten oder ungesinterten Schaum aufgebracht werden. Dabei kann diese Matte bereits mit einer Metallsuspension vorgetränkt sein oder durch nachfolgendes Aufrakeln oder Aufsprühen mit dieser beschichtet werden. Nach der Trocknung wird der Polymer-oder Naturfaserstoff durch die weitere Temperaturbehandlung thermisch zersetzt oder verbrannt, bevor der Metallschaum versintert. Anstelle von Faserstoffen können auch dünne Matten von feinporigem offenzelligem Polymerschaumstoff eingesetzt werden.

Nach dem Verbinden von Schaum und Folie kann der Sandwichverbund verformt werden. So kann beispielsweise ein Walzen auf eine geringere Dicke des Wärmestrahlungsschutzschirms durchgeführt werden. Dabei wird im Wesentlichen der Schaum verformt. Auch kann der Wärmestrahlungsschutzschirm gebogen, gefalzt oder abgekantet werden, um verschiedene Geometrien für den gewünschten Einsatzort herstellen zu können.

Nachfolgend wird die Erfindung anhand von Ausführungsbeispielen näher erläutert.

Beispiel 1

Ein erfindungsgemäßer Wärmestrahlungsschutzschirm besteht aus einem offenzelligen Molybdänschaum mit einer Porosität von 90%, einer Dichte von 1,02 g/cm$^3$ und einer mittleren Zellweite von 0,2 mm; die Dicke dieses Strahlungsschutzschirmes beträgt 5 mm.

Das Gewicht von einem Quadratmeter Fläche aus diesem Wärmestrahlungsschutzschirm beträgt 5,1 kg. Die Wärmeleitfähigkeit senkrecht zur Oberfläche in Vakuum beträgt bei Raumtemperatur 0,6 W/mK, bei 1000°C 1 W/mK. Die Wärmereflexion an der Oberfläche ist etwas niedriger als die herkömmlicher Molybdän-Wärmestrahlungsschutzschirme, der Emissionskoeffizient bei 1000°C beträgt ca. 0,35. Der effektive Emissionskoeffizient in Vakuum bei 1000°C beträgt 0,14.

Im Vergleich dazu besitzt ein herkömmlicher Molybdän-Wärmestrahlungsschutzschirm mit einer Dicke von 0,8 mm eine Dichte von 10,2 g/cm$^3$ und ein Flächengewicht von 8,2 kg/m$^2$. Die Wärmeleitung beträgt bei Raumtemperatur 145 W/mK und 105 W/mK bei 1000 °C. Der Emissionskoeffizient bei 1000°C beträgt 0,3. Der effektive Emissionskoeffizient in Vakuum bei 1000°C beträgt 0,15.

Mit dem erfindungsgemäßen Wärmestrahlungsschutzschirm kann in einem Vakuumofen mit der gleichen Anzahl an Wärmestrahlungsschutzschirmen eine bessere Wärmeisolationswirkung erreicht werden, wie bei herkömmlichen Wärmestrahlungsschutzschirmen. Durch die erfindungsgemäßen Wärmestrahlungsschutzschirme werden 38% an Molybdän, d.h. entsprechend weniger Gewicht und Wärmekapazität eingesetzt.

Beispiel 2

Ein erfindungsgemäßer Wärmestrahlungsschutzschirm besteht aus einem Sandwich aus einem 5 mm dicken Kern aus offenzelligem Molybdänschaum mit einer Dichte von 0,51 g/cm$^3$ und einer mittleren Zellweite von 0,8 mm; der beidseitig mit 0,1 mm dicker Molybdänfolie kaschiert und durch Versinterung stoffschlüssig verbunden ist. Die Dichte dieses Wärmestrahlungsschutzschirmes beträgt 0,88 g/cm$^3$.

Das Gewicht von einem Quadratmeter Fläche aus diesem Wärmestrahlungsschutzschirm beträgt 4,6 kg. Die Wärmeleitfähigkeit senkrecht zur Oberfläche in Vakuum beträgt bei Raumtemperatur 0,2 W/mK, bei 1000°C 0,9 W/mK. Die Wärmereflexion an der Oberfläche ist gleich der herkömmlicher Molybdän-Wärmestrahlungsschutzschirme, bei poliertem Blech von 0,14. Der effektive Emissionskoeffizient in Vakuum bei 1000°C beträgt 0,063, bei 1500°C 0,062.
Im Vergleich dazu besitzt ein herkömmlicher polierter Molybdän-Wärmestrahlungsschutzschirm mit einer Dicke von 0,8 mm eine Dichte von 10,2 g/cm$^3$ und ein Flächengewicht von 8,2 kg/m$^2$. Die Wärmeleitung beträgt bei Raumtemperatur 145 W/mK, 105 W/mK bei 1000 °C und 90 W/mK bei 1500°C. Der effektive Emissionskoeffizient in Vakuum bei 1000°C und 1500°C beträgt 0,070.

**Patentansprüche**

**1.** Vakuum- oder Schutzgasofen mit einem Wärmestrahlungsschutzschirm zwischen der Wärmequelle, wie den Heizleitern, und dem thermisch zu schützenden Bereich, wie der Ofenwandung, **dadurch gekennzeichnet, dass** der Wärmestrahlungsschutzschirm mindestens aus einem porösen metallischen Material mit einer Porosität im Bereich von 80 bis 97 % besteht , und welcher mindestens auf einer Oberfläche in Richtung der Wärmequelle hohe wärmestrahlungsreflektierende Eigenschaften besitzt.

**2.** Vakuum- oder Schutzgasofen mit einem Wärmestrahlungsschutzschirm zwischen der Wärmequelle, wie den Heizleitern, und dem thermisch zu schützenden Bereich, wie der Ofenwandung, **dadurch gekennzeichnet, dass** der Wärmestrahlungsschutzschirm mindestens besteht aus einem porösen keramischen Material, das ein Keramikschaum ist, und auf das eine Metallfolie, die mindestens auf einer Oberfläche in Richtung der Wärmequelle hohe wärmestrahlungsreflektierende Eigenschaften besitzt, aufgebracht ist.

**3.** Vakuum- oder Schutzgasofen nach Anspruch 1 oder 2, bei dem der Emissionskoeffizient an der Oberfläche 0,03-0,5 im Temperaturbereich von 20-1800°C beträgt.

**4.** Vakuum- oder Schutzgasofen nach Anspruch 2, bei dem das poröse keramische Material eine Porosität im Bereich von 80 bis 97 % aufweist.

**5.** Vakuum- oder Schutzgasofen nach Anspruch 1 oder 4, bei dem die Porosität ≥ 90 % beträgt.

**6.** Vakuum- oder Schutzgasofen nach Anspruch 1, bei dem für die wärmestrahlungsreflektierenden Eigenschaften ein Material mit geringem Emissionskoeffizienten auf das poröse metallische Material aufgebracht wird.

**7.** Vakuum- oder Schutzgasofen nach den Ansprüchen 2 oder 6, bei dem der Emissionskoeffizient der Metallfolie oder des aufgebrachten Materials mit geringem Emissionskoeffizienten 0,03-0,35 im Temperaturbereich von 20-1800°C beträgt.

**8.** Vakuum- oder Schutzgasofen nach Anspruch 6, bei dem das wärmestrahlungsreflektierende Material mit geringem Emissionskoeffizienten eine Metallfolie ist.

**9.** Vakuum- oder Schutzgasofen nach Anspruch 6, bei dem das wärmestrahlungsreflektierende Material eine dichte, porenfreie Metallfolie oder eine dichte Schicht ist.

**10.** Vakuum- oder Schutzgasofen nach Anspruch 2, bei dem der Keramikschaum aus Aluminiumsilikat, Siliciumnitrid oder Siliciumcarbid besteht.

**11.** Vakuum- oder Schutzgasofen nach Anspruch 1, bei dem das poröse metallische Material ein Metallschaum ist.

**12.** Vakuum- oder Schutzgasofen nach Anspruch 11, bei dem der Metallschaum aus hitzebeständigen Stahllegierungen, Metalllegierungen oder Refraktärmetallen, wie Molybdän, Wolfram, Tantal, oder deren Legierungen besteht.

**13.** Vakuum- oder Schutzgasofen nach Anspruch 2 oder 11, bei dem der Keramikschaum oder der Metallschaum ein richtungsabhängig strukturiertes dreidimensionales Netzwerk ist.

**14.** Vakuum- oder Schutzgasofen nach Anspruch 13, bei dem die richtungsabhängige Strukturierung eine geringere Wärmeleitfähigkeit des Materials senkrecht zur Oberfläche in Richtung der Wärmequelle aufweist als in paralleler Richtung zur Oberfläche in Richtung der Wärmequelle.

**15.** Vakuum- oder Schutzgasofen nach Anspruch 2 oder 11, bei dem Keramikschaum oder bei dem Metallschaum die Schaumzellweiten 0,2 bis 6 mm betragen.

16. Vakuum- oder Schutzgasofen nach den Ansprüchen 2 oder 6, bei dem die Metallfolie oder das wärmestrahlungsreflektierende Material mit geringem Emissionskoeffizienten eine Dicke von 0,005 bis 1,00 mm aufweist.

17. Vakuum- oder Schutzgasofen nach Anspruch 16, bei dem das wärmestrahlungsreflektierende Material mit geringem Emissionskoeffizienten eine Dicke von 0,005 bis 0,5 mm aufweist.

18. Vakuum- oder Schutzgasofen nach Anspruch 6, bei dem das poröse metallische Material und das wärmestrahlungsreflektierende Material mit geringem Emissionskoeffizienten aus dem gleichen Werkstoff bestehen.

19. Vakuum- oder Schutzgasofen nach Anspruch 18, bei dem der gleiche Werkstoff ein Metall ist.

20. Vakuum- oder Schutzgasofen nach Anspruch 19, bei dem der gleiche Werkstoff Molybdän oder Wolfram oder eine Molybdän- oder Wolframlegierung ist.

21. Vakuum- oder Schutzgasofen nach Anspruch 2, bei dem der Keramikschaum vollständig von der Metallfolie umgeben ist.

22. Vakuum- oder Schutzgasofen nach Anspruch 6, bei dem das poröse metallische Material vollständig von einem wärmestrahlungsreflektierenden Material mit geringem Emissionskoeffizienten umgeben ist.

23. Vakuum- oder Schutzgasofen nach den Ansprüchen 2 oder 6, bei dem die Metallfolie oder das wärmestrahlungsreflektierende Material mit geringem Emissionskoeffizienten den Keramikschaum oder das poröse metallische Material vakuumdicht umschließt.

24. Vakuum- oder Schutzgasofen nach Anspruch 23, bei dem im inneren Volumen, das von der Metallfolie oder dem wärmestrahlungsreflektierenden Material mit geringem Emissionskoeffizienten umschlossen ist, ein Vakuum vorliegt.

25. Vakuum- oder Schutzgasofen nach den Ansprüchen 2 oder 6, bei dem die Metallfolie oder das wärmestrahlungsreflektierende Material mit geringem Emissionskoeffizienten mindestens auf einer Oberfläche in Richtung der Wärmequelle einen möglichst niedrigen Emissionskoeffizienten und gleichzeitig der Keramikschaum oder das poröse metallische Material einen möglichst niedrigen Wärmeleitkoeffizienten aufweist.

26. Vakuum- oder Schutzgasofen nach Anspruch 25, bei dem der Emissionskoeffizient im Bereich von 0,03 bis 0,5 im Temperaturbereich von 20-1800°C und gleichzeitig der Wärmeleitkoeffizient im Bereich von 0,01 bis 3 W/mK im Temperaturbereich von 20-1800°C liegt.

27. Vakuum- oder Schutzgasofen nach Anspruch 25, bei dem der Emissionskoeffizient im Bereich von 0,03 bis 0,3 im Temperaturbereich von 20-1800°C und gleichzeitig der Wärmeleitkoeffizient im Bereich von 0,01 bis 1 W/mK im Temperaturbereich von 20-1800°C liegt.

28. Vakuum- oder Schutzgasofen nach Anspruch 1 oder 2, bei dem der effektive Emissionskoeffizient n im Bereich von 0,001 - < 0,15 liegt.

29. Vakuum- oder Schutzgasofen nach Anspruch 28, bei dem der effektive Emissionskoeffizient im Bereich von 0,001 - 0,069 liegt.

## Claims

1. Vacuum or protective atmosphere furnace having a thermal radiation shield between the heat source, such as the heating conductors, and the region to be protected from heat, such as the furnace wall, **characterized in that** the thermal radiation shield consists at least of a porous, metallic material which has a porosity in the range of 80 to 97% and, at least on a surface in the direction of the heat source, has high thermal radiation-reflecting properties.

2. Vacuum or protective atmosphere furnace having a thermal radiation shield between the heat source, such as the heating conductors, and the region to be protected from heat, such as the furnace wall, **characterized in that** the thermal radiation shield consists at least of a porous, ceramic material which is a ceramic foam and to which is applied a metal foil which, at least on a surface in the direction of the heat source, has high thermal radiation-reflecting properties.

**3.** Vacuum or protective atmosphere furnace according to Claim 1 or 2, in which the emission coefficient at the surface is 0.03-0.5 in the temperature range of 20-1800°C.

**4.** Vacuum or protective atmosphere furnace according to Claim 2, in which the porosity of the porous, ceramic material is in the range of 80 to 97%.

**5.** Vacuum or protective atmosphere furnace according to Claim 1 or 4, in which the porosity is ≥ 90%.

**6.** Vacuum or protective atmosphere furnace according to Claim 1, in which the thermal radiation-reflecting properties are obtained by applying a material having a low emission coefficient to the porous, metallic material.

**7.** Vacuum or protective atmosphere furnace according to Claim 2 or 6, in which the emission coefficient of the metal foil or of the applied material which has a low emission coefficient is 0.03-0.35 in the temperature range of 20-1800°C.

**8.** Vacuum or protective atmosphere furnace according to Claim 6, in which the material which reflects thermal radiation and has a low emission coefficient is a metal foil.

**9.** Vacuum or protective atmosphere furnace according to Claim 6, in which the material which reflects thermal radiation is a dense, pore-free metal foil or a dense layer.

**10.** Vacuum or protective atmosphere furnace according to Claim 2, in which the ceramic foam consists of aluminium silicate, silicon nitride or silicon carbide.

**11.** Vacuum or protective atmosphere furnace according to Claim 1, in which the porous, metallic material is a metal foam.

**12.** Vacuum or protective atmosphere furnace according to Claim 11, in which the metal foam consists of heat-resistant steel alloys, metal alloys or refractory metals, such as molybdenum, tungsten, tantalum or alloys thereof.

**13.** Vacuum or protective atmosphere furnace according to Claim 2 or 11, in which the ceramic foam or the metal foam is a directionally structured three-dimensional network.

**14.** Vacuum or protective atmosphere furnace according to Claim 13, in which the directional structuring has lower thermal conductivity of the material perpendicularly with respect to the surface in the direction of the heat source than in the parallel direction with respect to the surface in the direction of the heat source.

**15.** Vacuum or protective atmosphere furnace according to Claim 2 or 11, in which the width of the foam cells in the ceramic foam or in the metal foam is 0.2 to 6 mm.

**16.** Vacuum or protective atmosphere furnace according to Claim 2 or 6, in which the thickness of the metal foil or of the material which reflects thermal radiation and has a low emission coefficient is 0.005 to 1.00 mm.

**17.** Vacuum or protective atmosphere furnace according to Claim 16, in which the thickness of the material which reflects thermal radiation and has a low emission coefficient is 0.005 to 0.5 mm.

**18.** Vacuum or protective atmosphere furnace according to Claim 6, in which the porous, metallic material and the material which reflects thermal radiation and has a low emission coefficient consist of the same substance.

**19.** Vacuum or protective atmosphere furnace according to Claim 18, in which the same substance is a metal.

**20.** Vacuum or protective atmosphere furnace according to Claim 19, in which the same substance is molybdenum or tungsten or a molybdenum or tungsten alloy.

**21.** Vacuum or protective atmosphere furnace according to Claim 2, in which the ceramic foam is completely surrounded by the metal foil.

**22.** Vacuum or protective atmosphere furnace according to Claim 6, in which the porous, metallic material is completely surrounded by a material which reflects thermal radiation and has a low emission coefficient.

**23.** Vacuum or protective atmosphere furnace according to Claim 2 or 6, in which the metal foil or the material which reflects thermal radiation and has a low emission coefficient encloses the ceramic foam or the porous, metallic material in a vacuum-tight manner.

**24.** Vacuum or protective atmosphere furnace according to Claim 23, in which there is a vacuum in the internal volume enclosed by the metal foil or the material which reflects thermal radiation and has a low emission coefficient.

**25.** Vacuum or protective atmosphere furnace according to Claim 2 or 6, in which the metal foil or the material which reflects thermal radiation and has a low emission coefficient has the lowest possible emission coefficient at least on a surface in the direction of the heat source and, at the same time, the ceramic foam or the porous, metallic material has the lowest possible coefficient of thermal conductivity.

**26.** Vacuum or protective atmosphere furnace according to Claim 25, in which the emission coefficient is in the range of 0.03 to 0.5 in the temperature range of 20-1800°C and, at the same time, the coefficient of thermal conductivity is in the range of 0.01 to 3 W/mK in the temperature range of 20-1800°C.

**27.** Vacuum or protective atmosphere furnace according to Claim 25, in which the emission coefficient is in the range of 0.03 to 0.3 in the temperature range of 20-1800°C and, at the same time, the coefficient of thermal conductivity is in the range of 0.01 to 1 W/mK in the temperature range of 20-1800°C.

**28.** Vacuum or protective atmosphere furnace according to Claim 1 or 2, in which the effective emission coefficient n is in the range of 0.001 - < 0.15.

**29.** Vacuum or protective atmosphere furnace according to Claim 28, in which the effective emission coefficient is in the range of 0.001 - 0.069.

## Revendications

**1.** Four à vide ou four à gaz de protection avec un écran de protection contre les rayonnements thermiques entre la source de chaleur, comme des conducteurs de chaleur, et la zone à protéger thermiquement, comme la paroi du four, **caractérisé en ce que** l'écran de protection contre les rayonnements thermiques se compose au moins d'un matériau métallique poreux avec une porosité de l'ordre de 80 à 97 %, et qui possède de hautes propriétés de réflexion des rayonnements thermiques au moins sur une surface orientée vers la source de chaleur.

**2.** Four à vide ou four à gaz de protection avec un écran de protection contre les rayonnements thermiques entre la source de chaleur, comme des conducteurs de chaleur, et la zone à protéger thermiquement, comme la paroi du four, **caractérisé en ce que** l'écran de protection contre les rayonnements thermiques se compose au moins d'un matériau céramique poreux, qui est une mousse céramique, et sur lequel est déposé un film métallique, qui possède de hautes propriétés de réflexion des rayonnements thermiques au moins sur une surface orientée vers la source de chaleur.

**3.** Four à vide ou four à gaz de protection selon la revendication 1 ou 2, dans lequel le coefficient d'émission à la surface vaut 0,03 - 0,5 dans la plage de température de 20 - 1800°C.

**4.** Four à vide ou four à gaz de protection selon la revendication 2, dans lequel le matériau céramique poreux présente une porosité de l'ordre de 80 à 97 %.

**5.** Four à vide ou four à gaz de protection selon la revendication 1 ou 4, dans lequel la porosité vaut ≥ 90 %.

**6.** Four à vide ou four à gaz de protection selon la revendication 1, dans lequel un matériau avec un faible coefficient d'émission est déposé sur le matériau métallique poreux pour assurer les propriétés de réflexion des rayonnements thermiques.

7. Four à vide ou four à gaz de protection selon les revendications 2 ou 6, dans lequel le coefficient d'émission du film métallique ou du matériau déposé avec un faible coefficient d'émission vaut 0,03 - 0,35 dans la plage de température de 20 - 1800°C.

8. Four à vide ou four à gaz de protection selon la revendication 6, dans lequel le matériau réfléchissant les rayonnements thermiques avec un faible coefficient d'émission est un film métallique.

9. Four à vide ou four à gaz de protection selon la revendication 6, dans lequel le matériau réfléchissant les rayonnements thermiques est un film métallique étanche non poreux ou une couche étanche.

10. Four à vide ou four à gaz de protection selon la revendication 2, dans lequel la mousse céramique se compose de silicate d'aluminium, de nitrure de silicium ou de carbure de silicium.

11. Four à vide ou four à gaz de protection selon la revendication 1, dans lequel le matériau métallique poreux est une mousse métallique.

12. Four à vide ou four à gaz de protection selon la revendication 11, dans lequel la mousse métallique se compose d'alliages d'aciers, d'alliages métalliques ou de métaux réfractaires, comme le molybdène, le tungstène, le tantale ou leurs alliages, qui résistent à la chaleur.

13. Four à vide ou four à gaz de protection selon la revendication 2 ou 11, dans lequel la mousse céramique ou la mousse métallique est un réseau tridimensionnel structuré en fonction de la direction.

14. Four à vide ou four à gaz de protection selon la revendication 13, dans lequel la structuration en fonction de la direction présente une conductibilité thermique du matériau moins élevée perpendiculairement à la surface orientée vers la source de chaleur qu'en direction parallèle à la surface orientée vers la source de chaleur.

15. Four à vide ou four à gaz de protection selon la revendication 2 ou 11, dans lequel les largeurs des cellules de la mousse valent de 0,2 à 6 mm dans la mousse céramique ou dans la mousse métallique.

16. Four à vide ou four à gaz de protection selon les revendications 2 ou 6, dans lequel le film métallique ou le matériau réfléchissant les rayonnements thermiques avec un faible coefficient d'émission présente une épaisseur de 0,005 à 1,00 mm.

17. Four à vide ou four à gaz de protection selon la revendication 16, dans lequel le matériau réfléchissant les rayonnements thermiques avec un faible coefficient d'émission présente une épaisseur de 0,005 à 0,5 mm.

18. Four à vide ou four à gaz de protection selon la revendication 6, dans lequel le matériau métallique poreux et le matériau réfléchissant les rayonnements thermiques avec un faible coefficient d'émission sont composés de la même matière.

19. Four à vide ou four à gaz de protection selon la revendication 18, dans lequel la même matière est un métal.

20. Four à vide ou four à gaz de protection selon la revendication 19, dans lequel la même matière est le molybdène ou le tungstène ou un alliage de molybdène ou de tungstène.

21. Four à vide ou four à gaz de protection selon la revendication 2, dans lequel la mousse céramique est entièrement entourée par le film métallique.

22. Four à vide ou four à gaz de protection selon la revendication 6, dans lequel le matériau métallique poreux est entièrement entouré par un matériau réfléchissant les rayonnements thermiques avec un faible coefficient d'émission.

23. Four à vide ou four à gaz de protection selon les revendications 2 ou 6, dans lequel le film métallique ou le matériau réfléchissant les rayonnements thermiques avec un faible coefficient d'émission entoure la mousse céramique ou le matériau métallique poreux d'une façon étanche au vide.

24. Four à vide ou four à gaz de protection selon la revendication 23, dans lequel il règne un vide dans le volume intérieur, qui est entouré par le film métallique ou le matériau réfléchissant les rayonnements thermiques avec un faible coefficient d'émission.

**25.** Four à vide ou four à gaz de protection selon les revendications 2 ou 6, dans lequel le film métallique ou le matériau réfléchissant les rayonnements thermiques avec un faible coefficient d'émission présente, au moins sur une surface orientée vers la source de chaleur, un coefficient d'émission aussi faible que possible et en même temps la mousse céramique ou le matériau métallique poreux présente un coefficient de conductibilité thermique aussi faible que possible.

**26.** Four à vide ou four à gaz de protection selon la revendication 25, dans lequel le coefficient d'émission se situe dans une fourchette de 0,03 à 0,5 dans la plage de température de 20 - 1800°C et en même temps le coefficient de conductibilité thermique se situe dans une fourchette de 0,01 à 3 W/mK dans la plage de température de 20 - 1800°C.

**27.** Four à vide ou four à gaz de protection selon la revendication 25, dans lequel le coefficient d'émission se situe dans une fourchette de 0,03 à 0,3 dans la plage de température de 20 - 1800°C et en même temps le coefficient de conductibilité thermique se situe dans une fourchette de 0,01 à 1 W/mK dans la plage de température de 20 - 1800°C.

**28.** Four à vide ou four à gaz de protection selon la revendication 1 ou 2, dans lequel le coefficient d'émission effectif n se situe dans la fourchette de 0,001 à < 0,15.

**29.** Four à vide ou four à gaz de protection selon la revendication 28, dans lequel le coefficient d'émission effectif se situe dans la fourchette de 0,001 à 0,069.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6021155 B
- AT PS279190
- DE 4429104 A1
- AT PS390688
- JP 09176821 B
- DE 19750517 A1
- DE 19947755
- DE 3607047
- JP 63263370 B
- US 5744225 A
- US 3090094 F
- US 3111396 F
- DE 19753249 A1